# FASCICULE DE BREVET EUROPEEN

(11) **EP 2 814 693 B1**
(45) Date de publication et mention de la délivrance du brevet: **30.12.2015**
(21) Numéro de dépôt: 13706659.3
(22) Date de dépôt: 08.02.2013
(51) Int. Cl.: B60Q 1/26, B60Q 3/02, B32B 17/10, E06B 7/00, B60J 1/00, B29C 45/14, B29L 31/00, B29C 67/24, B29K 75/00, B29L 31/34, F21S 8/10, F21V 33/00, F21V 11/16, F21V 8/00, F21Y 101/02, F21Y 103/00

(54) **VITRAGE ÈCLAIRANT**
LEUCHTENDE GLASSSCHEIBE
ILLUMINATING GLAZING

(30) Priorité: 13.02.2012 FR 1251330
(43) Date de publication de la demande: 24.12.2014
(73) Titulaire: Saint-Gobain Glass France, 92400 Courbevoie (FR)
(72) Inventeur: MULET, Jean-Philippe, F-93100 Montreuil (FR); BERARD, Mathieu, F-75019 Paris (FR); PIROUX, Fabienne, F-60200 Compiegne (FR); KLEO, Christophe, F-60350 Attichy (FR); VERRAT-DEBAILLEUL, Adèle, F-60150 Villers-sur-Coudun (FR); BAUERLE, Pascal, F-80700 Roye (FR)
(74) Mandataire: Pöpping, Barbara
(86) Numéro de dépôt international: PCT/FR2013/050270
(87) Numéro de publication internationale: WO 2013/121134

(56) Documents cités:
- WO-A1-00/77336
- WO-A1-95/01493
- FR-A1- 2 937 710
- FR-A1- 2 937 711
- FR-A1- 2 955 530

## Description

La présente invention concerne un vitrage, de préférence un vitrage pour véhicules, éclairé par sa tranche au moyen de diodes électroluminescentes et comprenant un système assez simple de masquage efficace de la lumière parasite produite par ces diodes.

On connaît des vitrages, et en particulier des vitrages pour véhicules automobiles, éclairés par leur tranche au moyen de diodes électroluminescentes (LED). Dans le cas de vitrages feuilletés, ces LED injectent la lumière dans au moins une des deux feuilles de verre qui fonctionne alors comme un guide d'onde, amenant la lumière jusqu'à un moyen d'extraction de la lumière (élément diffusant) situé à quelque distance du bord du vitrage.

Un vitrage lumineux est décrit dans le document FR 2937710 A1.

L'intensité lumineuse émise par la face émettrice lambertienne de la LED est généralement très importante et la lumière est émise depuis celle-ci sur environ 180°. Pour des raisons esthétiques, on souhaite généralement masquer les LED et les soustraire au regard des personnes à proximité. Il existe différents moyens pour bloquer cette lumière directe des LED (appelée ci-après lumière parasite) : - le moyen d'encapsulation généralement formé d'un polymère opaque (polyuréthanne chargé de noir de carbone) peut couvrir le bord du vitrage et, à condition d'être suffisamment épais, bloquer efficacement la lumière parasite ; ce moyen n'est toutefois pas disponible pour certains vitrages dits à intégration « flush » où l'encapsulation couvre la tranche de la feuille mais ne s'étend pas significativement au-delà de celle-ci ; - un émail de masquage peut être appliqué soit en bordure de la feuille éclairée, soit en bordure de la feuille non éclairée qui est collée à la feuille éclairée via l'intercalaire de feuilletage transparent ; l'épaisseur d'un tel émail est toutefois limitée à quelques microns ce qui est souvent insuffisant pour un masquage efficace, - enfin, la carte à circuits imprimés sur laquelle sont montées les LED peut faire écran à la lumière ; son pouvoir opacifiant et/ou son étendue sont toutefois généralement insuffisants pour masquer parfaitement la lumière parasite.

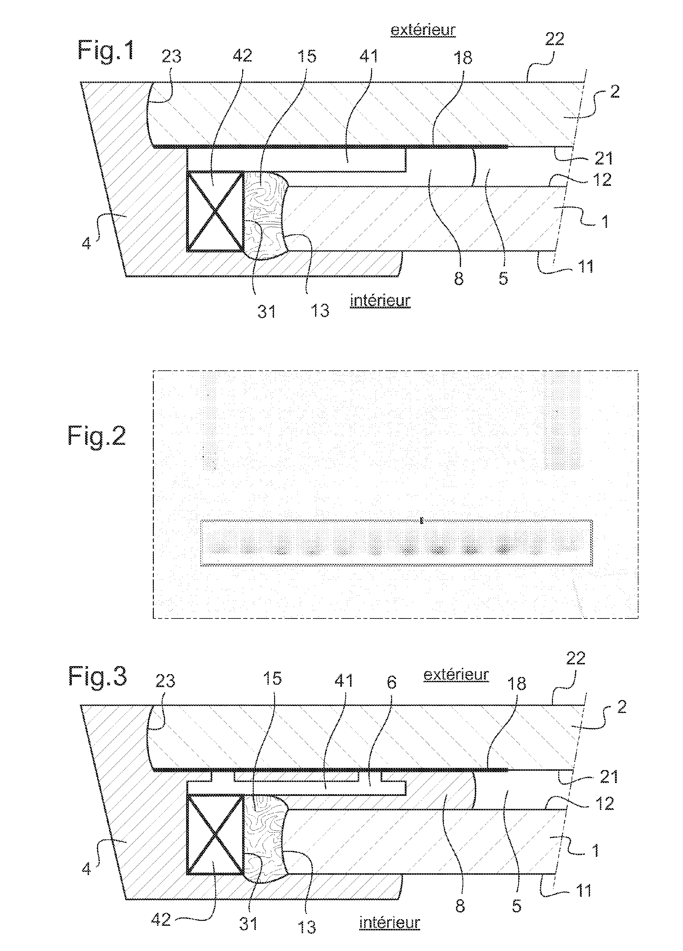

La figure 1, décrite plus en détail ci-après, montre un vitrage feuilleté à intégration « flush » selon l'état de la technique où la lumière parasite est bloquée sur le côté intérieur par l'élément d'encapsulation et vers l'extérieur par un émail de masquage insuffisamment opaque. Il en résulte des points lumineux résiduels visibles depuis l'extérieur et représentés à la figure 2.

L'idée à la base de la présente invention est de masquer la lumière parasite en laissant pénétrer le polymère opaque formant l'élément d'encapsulation dans une rainure relativement profonde, située entre les deux feuilles de verre. Cette rainure est définie entre les deux feuilles de verre par l'intercalaire de feuilletage qui a une étendue moins importante que chacune des feuilles collées. Plus la différence de taille entre l'intercalaire de feuilletage et les feuilles de verre est importante, plus la rainure est profonde.

Pour que le polymère opaque d'encapsulation puisse pénétrer aisément dans cet espace en forme de rainure profonde et le remplir sans formation de vides, la barrette LED, s'appuyant sur une des deux feuilles, ne doit pas faire obstacle à l'écoulement de la composition d'encapsulation liquide pendant l'étape d'injection. Il est donc prévu dans la présente invention que la carte à circuit imprimés (PCB, de l'anglais *printed circuit board*) comporte, sur le bord ou sur la surface par lesquels elle s'appuie sur la feuille de verre, plusieurs « espaceurs ». Ces « espaceurs » ou « plots » établissent un contact multi-points entre la PCB et le vitrage et permettent, au cours de l'étape d'encapsulation, le passage de la composition liquide d'encapsulation entre la PCB et la feuille de verre sur laquelle elle s'appuie.

La présente invention a par conséquent pour objet un vitrage éclairant, comprenant
- une première feuille, en verre minéral ou organique, avec une première face principale, une deuxième face principale et une tranche,
- une deuxième feuille, en verre minéral ou organique, avec une première face principale, une deuxième face principale et une tranche,
- un intercalaire de feuilletage, en contact adhésif avec la deuxième face principale de la première feuille et avec la première face principale de la deuxième feuille, ledit intercalaire de feuilletage ayant une étendue inférieure à celle de chacune des feuilles de verre définissant ainsi un espace en forme de rainure entre le bord de la deuxième face principale de la première feuille et le bord de la première face principale de la deuxième feuille,

- au moins une barrette de diodes électroluminescentes (LED) comportant une carte à circuits imprimés (PCB) et une pluralité de LED, positionnée de manière à ce que les faces émettrices des LED soient en regard de la tranche de la première feuille,
- un élément d'encapsulation en un polymère opaque encapsulant au moins la tranche de la deuxième feuille et la barrette de LED,
caractérisé par le fait que la PCB s'appuie sur la première face principale de la deuxième feuille de verre par l'intermédiaire d'une pluralité d'espaceurs et par le fait que l'espace en forme de rainure est rempli par le polymère opaque de l'élément d'encapsulation.

Le vitrage de la présente invention est un vitrage feuilleté comportant au moins deux feuilles simples collées l'une à l'autre de manière connue au moyen d'un intercalaire de feuilletage. Il est important de noter que, dans la description ci-après du vitrage, le terme « première feuille » désignera toujours la feuille de verre éclairée au niveau de sa tranche par la ou les sources lumineuses. La première feuille ou feuille éclairée est de préférence celle en contact avec l'intérieur du véhicule ou du bâtiment.

Chacune des deux feuilles du vitrage de la présente invention a une tranche et deux faces principales. On appellera première face principale la face destinée à être orientée vers l'intérieur de l'habitacle ou du bâtiment et deuxième face principale celle qui sera dirigée vers l'extérieur du bâtiment ou de l'habitacle du véhicule.

La deuxième feuille a de préférence une étendue plus importante que la première feuille et dépasse cette dernière au moins sur le bord du vitrage où sont les barrettes de LED. Dans ce mode de réalisation préféré de l'invention, les barrettes viennent s'appuyer, par l'intermédiaire des espaceurs, sur la première surface principale de la deuxième feuille.

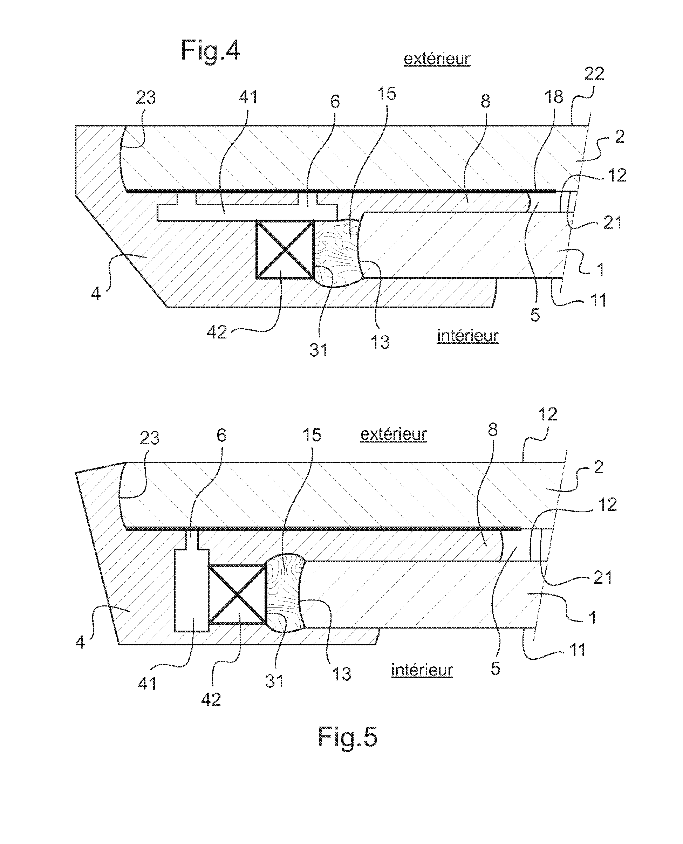

Les espaceurs peuvent se trouver sur la tranche de la PCB, comme dans le mode de réalisation représenté à la figure 5, mais sont situés de préférence sur la face de la PCB opposée à celle sur laquelle sont fixées les LED, comme montré aux figures 3 et 4 ci-après. Dans ce dernier cas, les barrettes LED sont à émission latérale (*side emitting LED*) alors que sur la figure 4 il s'agit de LED à émission frontale (*top emitting LED*).

Pour assurer une bonne assise à la PCB sur la deuxième feuille pendant la phase d'injection de la composition d'encapsulation et garantir que la plaque de PCB conserve une orientation parallèle au plan principal du vitrage, les espaceurs sont de préférence disposés dans un plan, c'est-à-dire ils ne sont pas alignés seulement selon une seule droite. En effet, si les espaceurs étaient positionnés uniquement selon une droite unique sur la PCB, un pivotement de la PCB autour de cet axe d'appui serait possible et aboutirait à une modification incontrôlée et indésirable de la direction d'injection de la lumière dans la première feuille.

Une bonne stabilité de la PCB peut être obtenue par des espaceurs alignés selon deux droites, parallèles l'une à l'autre et de préférence parallèles au bord de la PCB et au bord de la deuxième feuille.

Les espaceurs sont de préférence au nombre au moins égal à celui des LED et sont répartis de manière régulière sur la PCB, chaque LED étant de préférence associée à au moins un espaceur, situé à proximité immédiate. La périodicité des intervalles entre espaceurs reflète de préférence l'écartement entre les LED. En particulier pour les PCB souples il est important qu'un espaceur soit situé en dessous de chaque LED pour garantir un bon maintien en place.

Dans un mode de réalisation particulièrement avantageux de la présente invention, représenté à la figure 3, la PCB s'étend dans l'espace défini par l'intercalaire de feuilletage entre la première et la deuxième feuille. Ce mode de réalisation correspond en effet à une solution particulièrement compacte et stable où la PCB, logée entre les deux feuilles de verre, est de surcroit à l'abri d'éventuelles contraintes mécaniques.

Comme expliqué plus en détail ci-après, la composition d'encapsulation liquide formée par un mélange de monomères thermodurcissable, doit pénétrer au cours de l'opération d'encapsulation dans l'espace libre entre les deux feuilles en passant par la mince couche d'air ménagée par les espaceurs entre la PCB et la première face principale de la deuxième feuille. Pour que l'écoulement de la matière au cours de cette phase d'injection ne soit pas gêné, la couche d'air entre la PCB et la deuxième feuille doit être suffisamment épaisse. Cette épaisseur correspond au relief, c'est-à-dire à la hauteur des espaceurs. Elle est de préférence comprise entre 200 et 1000 µm, en particulier entre 400 et 700 µm. Les espaceurs peuvent servir accessoirement à ajuster la position de la face émettrice des LED en vis-à-vis de la tranche de la première feuille. A cette fin et si nécessaire, ils peuvent alors avoir une hauteur supérieure à 1 mm.

Ce relief des espaceurs ne doit pas être confondu avec l'épaisseur totale de la couche de masquage de la lumière parasite qui se formera entre les deux feuilles de verre en bordure du vitrage. Cette épaisseur de la couche de masquage sera déterminée essentiellement par l'écartement entre les deux feuilles de verre, autrement dit par l'épaisseur de l'intercalaire de feuilletage. Pour une opacification satisfaisante, l'espace entre les deux feuilles de verre, rempli par le polymère opaque de l'élément d'encapsulation a de préférence une épaisseur comprise entre 0,2 et 2 mm, en particulier entre 0,3 et 1,5 mm.

Il est important de préciser non seulement l'épaisseur mais également la largeur de la bande opaque de polymère d'encapsulation (qui correspond à la profondeur de la rainure définie par l'intercalaire de feuilletage et les deux feuilles). Cette largeur est de préférence comprise entre 0,2 cm et 2,0 cm, en particulier entre 0,3 et 1,0 cm. Lorsque le vitrage comporte deux feuilles de tailles différentes, l'une dépassant l'autre au moins au niveau des bords où sont situées les sources lumineuses, la profondeur de la rainure est définie comme la distance séparant le bord de l'intercalaire du bord de la plus petite feuille.

Le vitrage de la présente invention comporte en outre avantageusement un émail opaque appliqué sur le bord de la première face principale de la deuxième feuille, c'est-à-dire au niveau de la zone de contact entre la deuxième feuille et les espaceurs de la PCB. Cet émail a pour double fonction le masquage esthétique de cette zone de contact et le renforcement du pouvoir opacifiant de la couche de polymère d'encapsulation lorsque cette dernière est relativement mince. Ce revêtement d'émail doit bien entendu avoir une étendue suffisante pour masquer l'espace rempli par le polymère opaque de l'élément d'encapsulation et doit par conséquent s'étendre au moins jusqu'au bord de l'intercalaire de feuilletage voire au-delà.

Dans le vitrage de la présente invention, les barrettes LED sont en contact, sur une grande partie de leur surface, avec le polymère de l'élément d'encapsulation qui est généralement un assez bon isolant thermique. Cela peut gêner de façon indésirable l'évacuation de la chaleur générée, en cours de fonctionnement, par les LED et les autres composants de la PCB. Les espaceurs peuvent être dans certains cas les seuls points de contact de la PCB avec l'une des feuilles de verre et jouent alors un rôle important de pont thermique. Pour favoriser l'évacuation de la chaleur et limiter l'échauffement de la PCB, les espaceurs sont avantageusement constitués d'un matériau qui est un bon conducteur thermique, en particulier un matériau présentant une conductivité thermique λ au moins égale à 200 W/mK, de préférence au moins égale à 230 W/mK.

Les espaceurs peuvent être constitués par exemple d'un métal, tel que l'aluminium et les alliages d'aluminium, ou bien ils peuvent faire partie intégrante de la PCB et être constitués du même matériau que celle-ci.

Comme mentionné en introduction, le vitrage de la présente invention est de préférence un vitrage à intégration affleurante (en anglais « flush ») ce qui signifie que la deuxième face principale de la deuxième feuille, destinée à être en contact avec l'extérieur du véhicule ou bâtiment, n'est pas couverte par l'élément d'encapsulation qui recouvre uniquement la tranche de la deuxième feuille de verre.

La présente invention a également pour objet un procédé de fabrication d'un vitrage éclairant tel que défini ci-avant. Ce procédé comprend au moins les étapes successives suivantes :
(a) la mise à disposition d'un vitrage feuilleté comprenant
   - une première feuille, en verre minéral ou organique, avec une première face principale, une deuxième face principale et une tranche,
   - une deuxième feuille, en verre minéral ou organique, avec une première face principale, une deuxième face principale et une tranche,
   - un intercalaire de feuilletage, en contact adhésif avec la deuxième face principale de la première feuille et avec la première face principale de la deuxième feuille, ledit intercalaire de feuilletage ayant une étendue inférieure à celle de chacune des feuilles de verre définissant ainsi un espace en forme de rainure entre le bord de la deuxième face principale de la première feuille et le bord de la première face principale de la deuxième feuille,
(b) le positionnement d'au moins une barrette de LED comportant une carte à circuits imprimés (PCB) et une pluralité de LED, de manière à ce que les faces émettrices des LED soient en regard de la tranche de la première feuille, et que la PCB s'appuie sur la première face principale de la deuxième feuille de verre par l'intermédiaire d'une pluralité d'espaceurs,
(c) la formation d'un élément d'encapsulation en un polymère opaque encapsulant au moins la tranche de la deuxième feuille, la barrette LED et remplissant l'espace en forme de rainure entre le bord de la deuxième face principale de la première feuille et le bord de la première face principale de la deuxième feuille.

La ou les barrettes LED peuvent être fixées par collage. Il est particulièrement intéressant d'assurer le couplage optique entre les faces émettrices des LED et la tranche de la première feuille par une colle transparente qui permettra en outre d'empêcher, au cours de l'étape (c), la composition d'encapsulation d'obstruer et d'opacifier la zone entre les LED et la tranche de la première feuille.

La formation de l'élément d'encapsulation (étape (c)) se fait par injection d'une composition d'encapsulation liquide, dans un moule entourant le bord du vitrage. Cette composition d'encapsulation peut être une composition de monomères thermodurcissable, de préférence une composition comprenant au moins un polyisocyanate et un polyol (formation d'un polyuréthane), et le chauffage de ladite composition injectée jusqu'à une température et pendant une durée suffisantes pour obtenir son durcissement.

Il peut également s'agir d'une composition d'un polymère thermoplastique à l'état fondu. Le durcissement se fait alors non pas par chauffage mais par refroidissement du polymère.

Les conditions d'injection et de durcissement de la composition d'encapsulation et différentes formulations de compositions d'encapsulation thermodurcissables ou thermoplastiques sont connues. L'homme du métier saura les choisir et, si nécessaire, les adapter de façon à aboutir à un remplissage satisfaisant de l'espace entre les bords des deux feuilles de verre, à créer une bande de polymère suffisamment opaque et à supprimer ainsi toute lumière parasite.

La présente invention est illustrée à présent à l'aide de quelques modes de réalisation représentés dans les figures ci-après dans lesquelles
la figure 1 représente une coupe transversale du bord d'un vitrage feuilleté éclairé par des LED selon l'état de la technique,
la figure 2 est le négatif d'un cliché de vidéophotométrie montrant les points lumineux résiduels (lumière parasite) observés pour le vitrage de la figure 1,
la figure 3 montre, en coupe transversale, un premier mode de réalisation du bord d'un vitrage selon l'invention,
la figure 4 montre un deuxième mode de réalisation du bord d'un vitrage selon l'invention et
la figure 5 montre un troisième mode de réalisation du bord d'un vitrage selon l'invention.

Le vitrage feuilleté de la figure 1 comporte une première feuille de verre 1 avec une première face principale 11, une deuxième face principale 12, et une tranche 13 par laquelle une LED 42 supportée par une PCB 41 injecte de la lumière dans la première feuille. L'intercalaire de feuilletage 5 en contact adhésif avec la première surface principale 21 de la deuxième feuille et la deuxième surface principale 12 de la première feuille, a une étendue moins importante que les deux feuilles de verre 1,2 et définit ainsi entre ces deux feuilles un espace 8 en forme de rainure. Le couplage optique de la surface émettrice 31 de la LED 42 et la tranche 13 de la première feuille est assuré par une colle transparente 15. La PCB 41 est collée directement sur la première surface principale de la deuxième feuille. L'élément d'encapsulation 4 ne peut ainsi pas pénétrer dans l'espace 8 entre les deux feuilles et est en contact uniquement avec la tranche 23 de la deuxième feuille, une partie de la LED 42, la colle 15 et la première surface principale 11 de la première feuille.

L'élément d'encapsulation 4 en contact avec la première face principale 11 de la première feuille bloque toute lumière parasite susceptible d'être émise vers l'intérieur.

Un émail opaque 18 appliqué sur la première surface principale 21 de la deuxième feuille masque cette zone de contact entre la PCB et la feuille 2 vis-à-vis de l'extérieur. Le pouvoir opacifiant combiné de cet émail 18 et de la PCB 41 est suffisant pour bloquer l'émission de la lumière directe de la LED vers l'extérieur. Toutefois, au-delà de la PCB 41, le pouvoir opacifiant de l'émail seul est insuffisant pour faire écran à la lumière parasite.

La figure 2 montre le négatif d'un cliché de vidéophotométrie du vitrage de la figure 1 vue depuis l'extérieur. Chaque point sombre sur cette figure correspond à un point de lumière parasite d'une LED ayant traversé l'émail 18.

La figure 3 montre un premier mode de réalisation d'un vitrage selon la présente invention. La comparaison avec la figure 1 montre que la différence essentielle de ce vitrage réside dans la présence d'espaceurs 6 qui tiennent la PCB 41 à une certaine distance de la première surface principale 21 de la deuxième feuille. Grâce à l'espace défini ainsi entre la PCB 41 et la deuxième feuille 2, la composition liquide formant l'élément d'encapsulation 4 peut pénétrer, au cours de l'étape d'encapsulation, *via* cet espace dans l'espace en forme de rainure 8 défini par les deux feuilles 1,2 et l'intercalaire 5. Le remplissage de cet espace 8 par le polymère de l'élément d'encapsulation apporte une opacification supplémentaire qui supprime efficacement les lumières parasites.

La figure 4 montre un deuxième mode de réalisation du vitrage selon l'invention qui diffère de celui représenté à la figure 3 par le fait que la PCB 41 ne s'étend pas dans l'espace 8 en forme de rainure défini par les deux feuilles 1,2 et l'intercalaire 5. Ce mode de réalisation est utile par exemple lorsque l'épaisseur de la PCB 41 est supérieure ou égale à l'épaisseur de l'intercalaire et lorsqu'il est impossible de l'insérer dans l'espace 8.

Enfin, la figure 5 montre un troisième mode de réalisation du vitrage selon l'invention où la barrette LED à émission latérale des figures 3 et 4 est remplacée par une barrette LED à émission frontale. Les espaceurs 6, dont un seul est visible ici en coupe transversale, se trouvent non pas sur une surface principale de la PCB 41 mais sur la tranche de celle-ci.

## Revendications

1. Vitrage éclairant, comprenant
- une première feuille (1), en verre minéral ou organique, avec une première face principale (11), une deuxième face principale (12) et une tranche (13),
- une deuxième feuille (2), en verre minéral ou organique, avec une première face principale (21), une deuxième face principale (22) et une tranche (23),
- un intercalaire de feuilletage (5), en contact adhésif avec la deuxième face principale (12) de la première feuille (1) et avec la première face principale (21) de la deuxième feuille (2), ledit intercalaire de feuilletage ayant une étendue inférieure à celle de chacune des feuilles de verre définissant ainsi un espace (8) en forme de rainure entre le bord de la deuxième face principale (12) de la première feuille (1) et le bord de la première face principale (21) de la deuxième feuille (2),
- au moins une barrette de diodes électroluminescentes (LED) (4) comportant une carte à circuits imprimés (PCB) (41) et une pluralité de LED (42), positionnée de manière à ce que les faces émettrices (31) des LED soient en regard de la tranche (13) de la première feuille (1),
- un élément d'encapsulation (4) en un polymère opaque encapsulant au moins la tranche (23) de la deuxième feuille (2) et la barrette de LED (4),
**caractérisé par le fait que** la PCB (41) s'appuie sur la première face principale (21) de la deuxième feuille de verre (2) par l'intermédiaire d'une pluralité d'espaceurs (6) et **par le fait que** l'espace (8) est rempli par le polymère opaque de l'élément d'encapsulation (4).

2. Vitrage éclairant selon la revendication 1, **caractérisé par le fait que** la deuxième feuille (2) a une étendue plus importante que la première feuille (1) et dépasse cette dernière au moins sur le bord du vitrage où sont les barrettes de LED.

3. Vitrage éclairant selon l'une quelconque des revendications précédentes, **caractérisé par le fait que** la PCB (41) s'étend dans l'espace (8) défini par l'intercalaire de feuilletage (5) entre la première et la deuxième feuille.

4. Vitrage éclairant selon l'une quelconque des revendications précédentes, **caractérisé par le fait qu'**il comporte en outre un émail opaque (18) appliqué sur le bord de la première face principale (21) de la deuxième feuille (2), ledit émail ayant une étendue suffisante pour masquer l'espace (8) rempli par le polymère opaque de l'élément d'encapsulation (4).

5. Vitrage éclairant selon l'une quelconque des revendications précédentes, **caractérisé par le fait que** l'espace (8) rempli par le polymère opaque de l'élément d'encapsulation a une épaisseur comprise entre 0,2 et 2 mm, de préférence entre 0,3 et 1,5 mm, et une profondeur comprise entre 0,2 cm et 2 cm, de préférence entre 0,3 et 1,0 cm.

6. Vitrage éclairant selon l'une quelconque des revendications précédentes, **caractérisé par le fait que** les espaceurs (6) sont disposés de manière à ne pas être alignés seulement sur une seule droite.

7. Vitrage éclairant selon l'une quelconque des revendications précédentes, **caractérisé par le fait que** les espaceurs (6) sont alignés selon deux droites, parallèles l'une à l'autre et de préférence parallèles au bord de la PCB (41) et au bord de la deuxième feuille (2).

8. Vitrage éclairant selon l'une quelconque des revendications précédentes, **caractérisé par le fait que** la hauteur des espaceurs (6) est comprise entre 200 et 1000 µm, de préférence entre 400 et 700 µm.

9. Vitrage éclairant selon l'une quelconque des revendications précédentes, **caractérisé par le fait que** les espaceurs (6) sont constitués d'un matériau ayant une conductivité thermique λ au moins égale à 200 W/mK, de préférence au moins égale à 230 W/mK.

10. Vitrage éclairant selon l'une quelconque des revendications précédentes, **caractérisé par le fait que** les espaceurs (6) sont constitués d'un métal.

11. Vitrage éclairant selon l'une quelconque des revendications 1 à 9, **caractérisé par le fait que** les espaceurs (6) font partie intégrante de la PCB (41) et sont constitués du même matériau que celle-ci.

12. Procédé de fabrication d'un vitrage éclairant selon l'une quelconque des revendications précédentes, comprenant les étapes successives suivantes :
(a) la mise à disposition d'un vitrage feuilleté comprenant
- une première feuille (1), en verre minéral ou organique, avec une première face principale (11), une deuxième face principale (12) et une tranche (13),
- une deuxième feuille (2), en verre minéral ou organique, avec une première face principale (21), une deuxième face principale (22) et une tranche (23),
- un intercalaire de feuilletage (5), en contact adhésif avec la deuxième face principale (12) de la première feuille (1) et avec la première face principale (21) de la deuxième feuille (2), ledit intercalaire de feuilletage (5) ayant une étendue inférieure à celle de chacune des feuilles de verre (1,2) définissant ainsi un espace (8) en forme de rainure entre le bord de la deuxième face principale (12) de la première feuille (1) et le bord de la première face principale (21) de la deuxième feuille (2),
(b) le positionnement d'au moins une barrette de LED (4) comportant une carte à circuits imprimés (PCB) (41) et une pluralité de LED (42), de manière à ce que les faces émettrices (31) des LED (42) soient en regard de la tranche (13) de la première feuille (2), et que la PCB s'appuie sur la première face principale (21) de la deuxième feuille de verre (1) par l'intermédiaire d'une pluralité d'espaceurs (6),
(c) la formation d'un élément d'encapsulation (4) en un polymère opaque encapsulant au moins la tranche (23) de la deuxième feuille, la barrette LED (4) et remplissant l'espace (8) entre le bord de la deuxième face principale (12) de la première feuille (1) et le bord de la première face principale (21) de la deuxième feuille (2).

13. Procédé selon la revendication 12, **caractérisé par le fait que** l'étape (c) comprend l'injection, dans un moule entourant le bord du vitrage, d'une composition de monomères thermodurcissable, de préférence une composition comprenant au moins un polyisocyanate et un polyol, et le chauffage de ladite composition injectée jusqu'à une température et pendant une durée suffisantes pour obtenir son durcissement.

## Patentansprüche

1. Leuchtende Verglasung, umfassend:
- eine erste Scheibe (1), aus mineralischem oder organischem Glas, mit einer ersten Hauptseite (11), einer zweiten Hauptseite (12) und einer Kante (13),
- eine zweite Scheibe (2), aus mineralischem oder organischem Glas, mit einer ersten Hauptseite (21), einer zweiten Hauptseite (22) und einer Kante (23),
- eine verbindende Zwischenschicht (5), die in Klebekontakt mit der zweiten Hauptseite (12) der ersten Scheibe (1) und mit der ersten Hauptseite (21) der zweiten Scheibe (2) ist, wobei die verbindende Zwischenschicht eine Ausdehnung hat, die geringer als die jeder der Glasscheiben ist, wodurch sie einen Raum (8) in Form einer Nut zwischen dem Rand der zweiten Hauptseite (12) der ersten Scheibe (1) und dem Rand der ersten Hauptseite (21) der zweiten Scheibe (2) definiert,
- mindestens eine Leuchtdioden- (LED)-Leiste (4), die eine gedruckte Leiterplatte (PCB) (41) und eine Vielzahl von LEDs (42) aufweist, die so angeordnet ist, dass die emittierenden Flächen (31) der LEDs der Kante (13) der ersten Scheibe (1) zugewandt sind,
- ein Einkapselungselement (4) aus einem opaken Polymer, das mindestens die Kante (23) der zweiten Scheibe (2) und die LED-Leiste (4) einkapselt,
**dadurch gekennzeichnet, dass** die PCB (41) sich auf der ersten Hauptseite (21) der zweiten Glasscheibe (2) mittels einer Vielzahl von Abstandselementen (6) abstützt, und dadurch, dass der Raum (8) durch das opake Polymer des Einkapselungselements (4) gefüllt ist.

2. Leuchtende Verglasung nach Anspruch 1, **dadurch gekennzeichnet, dass** die zweite Scheibe (2) eine Ausdehnung hat, die größer als die erste Scheibe (1) ist und diese letzte mindestens auf dem Rand der Verglasung, wo die LED-Leisten sind, übersteht.

3. Leuchtende Verglasung nach einem der vorhergehenden Ansprüche, **dadurch gekennzeichnet, dass** die PCB (41) sich in dem Raum (8) erstreckt, der durch die verbindende Zwischenschicht (5) zwischen der ersten und der zweiten Scheibe definiert ist.

4. Leuchtende Verglasung nach einem der vorhergehenden Ansprüche, **dadurch gekennzeichnet, dass** sie ferner ein opakes Email (18) aufweist, das auf den Rand der ersten Hauptseite (21) der zweiten Scheibe (2) aufgetragen ist, wobei das Email eine ausreichende Ausdehnung hat, um den Raum (8) zu verdecken, der durch das opake Polymer des Einkapselungselements (4) gefüllt ist.

5. Leuchtende Verglasung nach einem der vorhergehenden Ansprüche, **dadurch gekennzeichnet, dass** der Raum (8), der durch das opake Polymer des Einkapselungselements (4) gefüllt ist, eine Dicke hat, die zwischen 0,2 und 2 mm, vorzugsweise zwischen 0,3 und 1,5 mm beträgt, und eine Tiefe hat, die zwischen 0,2 cm und 2 cm, vorzugsweise zwischen 0,3 und 1,0 cm beträgt.

6. Leuchtende Verglasung nach einem der vorhergehenden Ansprüche, **dadurch gekennzeichnet, dass** die Abstandselemente (6) so angeordnet sind, dass sie nicht nur auf einer einzigen Geraden ausgerichtet sind.

7. Leuchtende Verglasung nach einem der vorhergehenden Ansprüche, **dadurch gekennzeichnet, dass** die Abstandselemente (6) gemäß zwei Geraden ausgerichtet sind, die parallel zueinander und vorzugsweise parallel zu dem Rand der PCB (41) und zu dem Rand der zweiten Scheibe (2) sind.

8. Leuchtende Verglasung nach einem der vorhergehenden Ansprüche, **dadurch gekennzeichnet, dass** die Höhe der Abstandselemente (6) zwischen 200 und 1.000 µm, vorzugsweise zwischen 400 und 700 µm beträgt.

9. Leuchtende Verglasung nach einem der vorhergehenden Ansprüche, **dadurch gekennzeichnet, dass** die Abstandselemente (6) aus einem Material gebildet sind, das eine Wärmeleitfähigkeit λ hat, die mindestens gleich 200 W/mK, vorzugsweise mindestens gleich 230 W/mK ist.

10. Leuchtende Verglasung nach einem der vorhergehenden Ansprüche, **dadurch gekennzeichnet, dass** die Abstandselemente (6) aus einem Metall gebildet sind.

11. Leuchtende Verglasung nach einem der Ansprüche 1 bis 9, **dadurch gekennzeichnet, dass** die Abstandselemente (6) integraler Bestandteil der PCB (41) sind und aus dem selben Material wie diese gebildet sind.

12. Verfahren zur Herstellung einer leuchtenden Verglasung nach einem der vorhergehenden Ansprüche, das die folgenden aufeinanderfolgenden Schritte umfasst:
(a) Bereitstellen einer Verbundverglasung, die Folgendes umfasst:
- eine erste Scheibe (1), aus mineralischem oder organischem Glas, mit einer ersten Hauptseite (11), einer zweiten Hauptseite (12) und einer Kante (13),
- eine zweite Scheibe (2), aus mineralischem oder organischem Glas, mit einer ersten Hauptseite (21), einer zweiten Hauptseite (22) und einer Kante (23),
- eine verbindende Zwischenschicht (5), die in Klebekontakt mit der zweiten Hauptseite (12) der ersten Scheibe (1) und mit der ersten Hauptseite (21) der zweiten Scheibe (2) ist, wobei die verbindende Zwischenschicht (5) eine Ausdehnung hat, die geringer als die jeder der Glasscheiben (1, 2) ist, wodurch sie einen Raum (8) in Form einer Nut zwischen dem Rand der zweiten Hauptseite (12) der ersten Scheibe (1) und dem Rand der ersten Hauptseite (21) der zweiten Scheibe (2) definiert,
(b) Anordnen mindestens einer LED-Leiste (4), die eine gedruckte Leiterplatte (PCB) (41) und eine Vielzahl von LEDs (42) aufweist, dergestalt, dass die emittierenden Flächen (31) der LEDs (42) der Kante (13) der ersten Scheibe (1) zugewandt sind und dass die PCB sich auf der ersten Hauptseite (21) der zweiten Glasscheibe (2) mittels einer Vielzahl von Abstandselementen (6) abstützt,
(c) Bilden eines Einkapselungselements (4) aus einem opaken Polymer, das mindestens die Kante (23) der zweiten Scheibe und die LED-Leiste (4) einkapselt und den Raum (8) zwischen dem Rand der zweiten Hauptseite (12) der ersten Scheibe (1) und dem Rand der ersten Hauptseite (21) der zweiten Scheibe (2) füllt.

13. Verfahren nach Anspruch 12, **dadurch gekennzeichnet, dass** der Schritt (c) Folgendes umfasst: das Einspritzen, in ein Formwerkzeug, das den Rand der Verglasung umgibt, einer wärmehärtbaren Monomer-Zusammensetzung, vorzugsweise einer Zusammensetzung, die mindestens ein Polyisocyanat und ein Polyol enthält, und das Aufheizen der eingespritzten Zusammensetzung bis auf eine Temperatur und während eines Zeitraums, die ausreichen, um seine Aushärtung zu bewirken.

## Claims

1. An illuminating glazing unit, comprising:
- a first sheet (1), made of mineral or organic glass, having a first main face (11), a second main face (12) and an edge face (13);
- a second sheet (2), made of mineral or organic glass, having a first main face (21), a second main face (22) and an edge face (23);
- a lamination interlayer (5), making adhesive contact with the second main face (12) of the first sheet (1) and with the first main face (21) of the second sheet (2), said lamination interlayer having an extent smaller than that of each of the glass sheets and thus defining a groove-shaped space (8) between the edge of the second main face (12) of the first sheet (1) and the edge of the first main face (21) of the second sheet (2);
- at least one strip of light-emitting diodes (LEDs) (4), comprising a printed circuit board (PCB) (41) and a plurality of LEDs (42), positioned so that the emitting faces (31) of the LEDs face the edge face (13) of the first sheet (1); and
- an encapsulating element (4) made of an opaque polymer encapsulating at least the edge face (23) of the second sheet (2) and the LED strip (4),
**characterized in that** the PCB (41) bears against the first main face (21) of the second glass sheet (2) by way of a plurality of spacers (6) and **in that** the space (8) is filled by the opaque polymer of the encapsulating element (4).

2. The illuminating glazing unit as claimed in claim 1, **characterized in that** the second sheet (2) is of larger extent than the first sheet (1) and extends beyond the latter at least on the edge of the glazing unit where the strips of LEDs are located.

3. The illuminating glazing unit as claimed in any one of the preceding claims, **characterized in that** the PCB (41) extends into the space (8) defined by the lamination interlayer (5) between the first and second sheet.

4. The illuminating glazing unit as claimed in any one of the preceding claims, **characterized in that** it furthermore comprises an opaque enamel (18) applied to the edge of the first main face (21) of the second sheet (2), said enamel being of sufficient extent to mask the space (8) filled by the opaque polymer of the encapsulating element (4).

5. The illuminating glazing unit as claimed in any one of the preceding claims, **characterizing in that** the space (8) filled by the opaque polymer of the encapsulating element has a thickness comprised between 0.2 and 2 mm, and preferably between 0.3 and 1.5 mm, and a depth comprised between 0.2 cm and 2 cm, and preferably between 0.3 and 1.0 cm.

6. The illuminating glazing unit as claimed in any one of the preceding claims, **characterized in that** the spacers (6) are placed in such a way that they are not aligned only on a single straight line.

7. The illuminating glazing unit as claimed in any one of the preceding claims, **characterized in that** the spacers (6) are aligned along two straight lines, parallel to each other and preferably parallel to the edge of the PCB (41) and to the edge of the second sheet (2).

8. The illuminating glazing unit as claimed in any one of the preceding claims, **characterized in that** the height of the spacers (6) is comprised between 200 and 1000 µm, and preferably between 400 and 700 µm.

9. The illuminating glazing unit as claimed in any one of the preceding claims, **characterized in that** the spacers (6) are made of a material having a thermal conductivity λ at least equal to 200 W/mK, and preferably at least equal to 230 W/mK.

10. The illuminating glazing unit as claimed in any one of the preceding claims, **characterized in that** the spacers (6) are made of a metal.

11. The illuminating glazing unit as claimed in any one of claims 1 to 9, **characterized in that** the spacers (6) are an integral part of the PCB (41) and are made of the same material as the latter.

12. A process for manufacturing an illuminating glazing unit according to any one of the preceding claims, comprising the following steps in succession:
(a) providing a laminated glazing unit, comprising:
- a first sheet (1), made of mineral or organic glass, having a first main face (11), a second main face (12) and an edge face (13);
- a second sheet (2), made of mineral or organic glass, having a first main face (21), a second main face (22) and an edge face (23);
- a lamination interlayer (5), making adhesive contact with the second main face (12) of the first sheet (1) and with the first main face (21) of the second sheet (2), said lamination interlayer (5) having an extent smaller than that of each of the glass sheets (1, 2) and thus defining a groove-shaped space (8) between the edge of the second main face (12) of the first sheet (1) and the edge of the first main face (21) of the second sheet (2);
(b) positioning at least one strip of LEDs (4) comprising a printed circuit board (PCB) (41) and a plurality of LEDs (42), so that the emitting faces (31) of the LEDs (42) face the edge face (13) of the first sheet (1), and so that the PCB bears against the first main face (21) of the second glass sheet (2) by way of a plurality of spacers (6); and
(c) forming an encapsulating element (4) made of an opaque polymer encapsulating at least the edge face (23) of the second sheet, and the LED strip (4), and filling the space (8) between the edge of the second main face (12) of the first sheet (1) and the edge of the first main face (21) of the second sheet (2).

13. The process as claimed in claim 12, **characterized in that** step (c) comprises injecting, into a mould surrounding the edge of the glazing unit, a composition of thermosetting monomers, preferably a composition comprising at least one polyisocyanate and a polyol, and heating said injected composition to a temperature and for a sufficient amount of time to cause it to set.
